# EUROPEAN PATENT APPLICATION

(11) **EP 3 919 774 A1**
(43) Date of publication of application: **08.12.2021**
(21) Application number: 20860698.8
(22) Date of filing: 04.09.2020
(51) Int. Cl.: F16F 13/26

(54) **CAVITY FOR USE BY LIQUID COMPOSITE SPRING**

(30) Priority: 06.09.2019 CN 201910851700
(71) Applicant: Zhuzhou Times New Material Technology Co., Ltd., Zhuzhou, Hunan 412007 (CN)
(72) Inventor: LIU, Guijie, Zhuzhou, Hunan 412007 (CN); DING, Xingwu, Zhuzhou, Hunan 412007 (CN); BU, Jiling, Zhuzhou, Hunan 412007 (CN); WANG, Yongguan, Zhuzhou, Hunan 412007 (CN); XIA, Zhangyang, Zhuzhou, Hunan 412007 (CN)
(74) Representative: Laine IP Oy
(86) International application number: PCT/CN2020/113486
(87) International publication number: WO 2021/043264

(57) **Abstract**

A chamber device for a liquid composite spring, comprising: an outer wall (1); an upper liquid chamber (11) formed in an upper portion of the outer wall (1), the upper liquid chamber (11) being filled with liquid; and a lower liquid chamber (12) formed in a lower portion of the outer wall (1), the lower liquid chamber (12) being filled with liquid and in communication with the upper liquid chamber (11). A bottom of the outer wall (1) is provided with a sealing member (2) for sealing the lower liquid chamber (12). The sealing member (2) is deformable, so that the lower liquid chamber (12) is formed as a flexible chamber. The chamber device for the liquid composite spring has a rigid outer wall and a flexible sealing member. The volume and shape of the lower liquid chamber can be changed through the flexible sealing member, so that the lower liquid chamber is formed as a flexible chamber.

## Description

### Technical Field

The present invention relates to a chamber device for a liquid composite spring, and in particular to a liquid composite spring used for vehicles, especially for rail vehicles.

### Technical Background

Complicated vibration will be generated when a rail vehicle is running on a rail, so that it is necessary to install a spring device on the rail vehicle for reducing mechanical vibrations. Use of traditional rubber cone springs can readily achieve different values of stiffness in vertical, horizontal and longitudinal directions with improved nonlinear characteristics. Therefore, such rubber cone springs can normally meet the requirements of general axle box suspension. However, due to the limitations of rubber material, the dynamic stiffness of the rubber cone spring will be reduced as the frequency of the vibration increases, so that the phenomenon of high-frequency dynamic softening will occur. At the same time, since the damping performance of the rubber material is relatively small, the capability thereof for dissipating vibration energy is limited.

### Summary of the Invention

In view of the above problems, the present invention proposes a chamber device for a liquid composite spring, which is provided therein with a flexible chamber, whereby variable stiffness can be obtained.

The present invention proposes a chamber device for a liquid composite spring, comprising: an outer wall; an upper liquid chamber formed in an upper portion of the outer wall, the upper liquid chamber being filled with liquid; and a lower liquid chamber formed in a lower portion of the outer wall, the lower liquid chamber being filled with liquid and in communication with the upper liquid chamber. A bottom of the outer wall is provided with a sealing member for sealing the lower liquid chamber, and the sealing member is deformable, so that the lower liquid chamber is formed as a flexible chamber.

As a further improvement of the present invention, a main body of the sealing member is of an annular structure, and has a connecting edge arranged at an outer edge of the sealing member along an axial direction of the outer wall. An upper end of the connecting edge is connected with the bottom of the outer wall, while an inner tail thereof is connected with a core shaft.

As a further improvement of the present invention, the bottom of the outer wall is provided with a groove along a circumferential direction thereof, and the upper end of the connecting edge of the sealing member is arranged in the groove.

As a further improvement of the present invention, a metal ring is provided between the connecting edge of the sealing member and the groove, and a flange, which is flush with the connecting edge, is formed at an inner side of an upper part of the metal ring.

As a further improvement of the present invention, a rubber pad is arranged between the metal ring and the outer wall.

As a further improvement of the present invention, the outer wall, the metal ring and the sealing member are connected together through at least one bolt.

As a further improvement of the present invention, a projecting element is provided on an inner side of the sealing member, and is clamped inside the core shaft.

As a further improvement of the present invention, the core shaft is provided with a step having a clamping slot. The inner tail of the sealing member is arranged below the step, and the projecting element is clamped in the clamping slot.

As a further improvement of the present invention, the core shaft is provided with a metal gasket, which is detachably connected to a lower side of the sealing member.

As a further improvement of the present invention, a rubber body is provided at a bottom of the upper liquid chamber, and the lower liquid chamber is connected to the upper liquid chamber through a flow channel body and a plurality of partitioning plates.

As a further improvement of the present invention, the rubber body is filled within a gap formed between the flow channel body and the partitioning plates.

Compared with the prior arts, the present invention has the following advantages. The chamber device for the liquid composite spring according to the present invention has a rigid outer wall and a flexible sealing member. The volume and shape of the lower liquid chamber can be changed through the flexible sealing member, so that the lower liquid chamber is formed as a flexible chamber. Accordingly, the chamber device for the liquid composite spring according to the present invention can provide optimized variable stiffness and dampening effect, and also avoid the phenomenon of dynamic softening as occurred in traditional metal-rubber springs.

### Brief Description of the Drawings

Fig. 1 schematically shows the structure of a chamber device for a liquid composite spring according to an embodiment of the present invention.
Fig. 2 is an enlarged view of area A of Fig. 1, showing the structure of a connection between a sealing member and an outer wall.
Fig. 3 is an enlarged view of area B of Fig. 1, showing the structure of a connection between the sealing member and a core shaft.

In the drawings, the same components are indicated with the same reference signs, respectively. The drawings are not drawn to actual scale.

### List of reference signs

1. Outer wall
2. Sealing member
3. Core shaft
11. Upper liquid chamber
12. Lower liquid chamber
13. Partitioning plate
14. Groove
15. Flow channel body
16. Rubber body
21. Connecting edge
22. Metal ring
23. Flange
24. Rubber pad
25. Bolt
26. Projecting element
31. Step
32. Clamping slot
33. Rubber gasket.

### Detailed Description of the Embodiments

The present invention will be further described below in conjunction with the accompanying drawings.

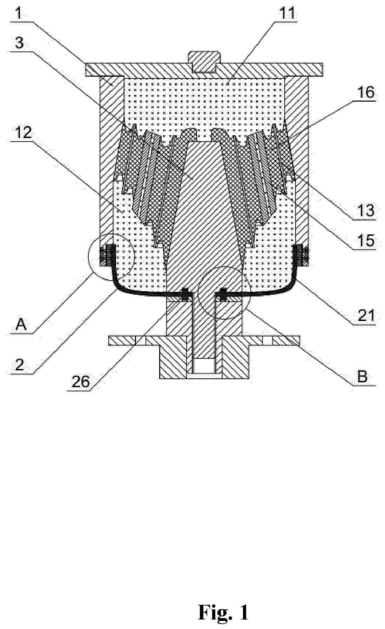

Fig. 1 schematically shows a chamber device for a liquid composite spring according to an embodiment of the present invention. The chamber device for the liquid composite spring according to the present invention is used for vehicles, especially for rail vehicles, and provided with a flexible chamber, thereby providing variable stiffness.

Fig. 1 schematically shows the chamber device for the liquid composite spring according to an embodiment of the present invention, which includes an outer wall 1. The outer wall 1 has a structure of a cylinder made by rigid material, and is preferably a metal outer wall. An upper liquid chamber 11 is formed in an upper portion of the outer wall 1, and is filled with liquid. In addition, a lower liquid chamber 12 is formed in a lower portion of the outer wall 1, and is spaced from the upper liquid chamber 11 with a certain distance. In this embodiment, the lower liquid chamber 12 is filled with liquid also, and liquid in the upper liquid chamber 11 can be in communication with that in the lower liquid chamber 12.

In the chamber device for the liquid composite spring according to the present embodiment of the present invention, it has a rigid outer wall 1 and a flexible sealing member 2. The flexible sealing member 2 is configured to seal the lower liquid chamber 12, whereby the lower liquid chamber 12 is formed as a flexible chamber. When vibrations occur, liquid can flow between the upper liquid chamber 11 and the lower liquid chamber 12 following the vibrations, so that it will flow in or out of the lower liquid chamber 12 during the procedure. With the flexible sealing member 2, expansion and contraction of the lower liquid chamber 12 can be facilitated.

In one embodiment, as shown in Fig. 1, a main body of the sealing member 2 is of an annular structure, and is arranged along a radial direction of the outer wall 1 and perpendicular to a height direction of the outer wall 1. An outer edge of the sealing member 2 is provided with a connecting edge 21, which is arranged along an axial direction of the outer wall 1, i.e., a vertically upward direction in Fig. 1. The connecting edge 21 is connected to a bottom of the outer wall 1. An inner edge of the sealing member 2 is connected to a core shaft 3. In the present embodiment, an upper portion of the core shaft 3 extends into an interior space of the outer wall 1, and is connected with the upper liquid chamber 11 and the lower liquid chamber 12. The sealing member 2 is connected to a middle portion of the core shaft 3.

When the chamber device for the liquid composite spring according to the present embodiment is in use, the outer edge of the sealing member 2 is connected to the outer wall 1 through the connecting edge 21. Accordingly, the transition area of the sealing member 2 which is connected with the outer wall 1 becomes smoother, and at the same time, the shape of the connecting edge 21 is better matched with that of the outer wall 1. In this manner, the connection between the sealing member 2 and the outer wall 1 becomes more stable.

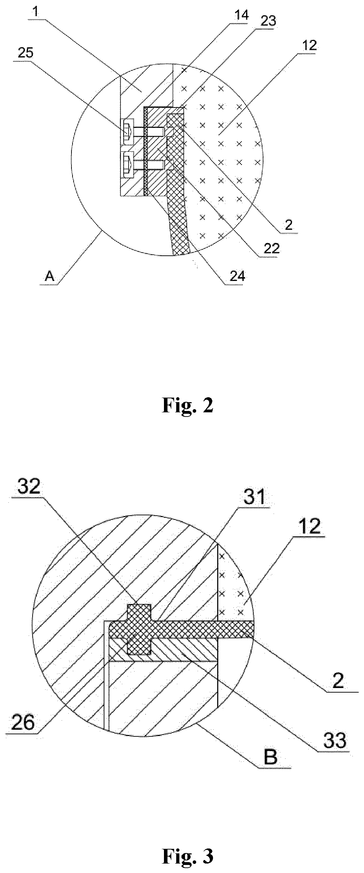

In a preferred embodiment, as shown in Fig. 2, the bottom of the outer wall 1 is provided along a circumferential direction of the outer wall 1 with a groove 14, which is located on the inner side of the outer wall 1. The connecting edge 21 of the sealing member 2 extends into the groove 14, with an upper end thereof being snugly fitted with the groove 14. With the position limiting function provided by the groove 14, it can ensure that the sealing element 2 and the outer wall 1 maintain a proper relative position of connection.

In the chamber device for the liquid composite spring according to the present embodiment, the groove 14 is provided on the inner side of the outer wall 1. The groove 14 is configured to clamp the connecting edge 21 therein, so as to ensure that the outer wall 1 and the sealing member 2 are connected at a proper position. At the same time, a structure like the groove 14 can facilitate sealing.

In one embodiment, a metal ring 22 is provided between the connecting edge 21 of the sealing member 2 and the outer wall 1, wherein the metal ring 22 is clamped in the groove 14. The metal ring 22 has a height corresponding to a depth of the groove 14. When the metal ring 22 is placed in the groove 14, a lower end of the metal ring 22 is flush with the bottom end of the outer wall 1. An inner side of the metal ring 22 is provided with a flange 23, wherein the flange 23 is arranged at an upper part of the metal ring 22. The flange 23 has a thickness corresponding to the thickness of the connecting edge 21. The connecting edge 21 is located at an inner side of the metal ring 22, with the upper end thereof being aligned with the flange 23.

In the chamber device for the liquid composite spring according to the present embodiment, the metal ring 22 is connected to the edge of the sealing member 2. Since the sealing member is made of a flexible material, it can be more firmly connected to the outer wall 1 through the metal ring 22. In addition, the metal ring 22 can increase the contact area between the sealing member 2 and the outer wall 1, thereby increasing the sealing performance.

In an embodiment, a rubber pad 24 is provided between the metal ring 22 and the outer wall 1. The rubber pad 24 has a width the same as that of the metal ring 22, and is located in the groove 14. An inner side of the rubber pad 24 is connected to the metal ring 22, and an outer side thereof is connected to the groove 14. In this embodiment, the rubber pad 24 can provide additional dampening and sealing effect, and enhance the sealing performance of the lower liquid chamber 12 as a whole.

In one embodiment, the outer wall 1, the metal ring 22 and the sealing member 2 are connected by bolts 25. The sealing member 2 is provided with a number of threaded holes, and the metal ring 22 and the outer wall 1 are both provided with through holes or threaded holes at respective positions corresponding to the threaded holes of the sealing member 2. When the metal ring 22 is placed in the groove 14, the connecting edge 21 of the sealing member 2 is located at the inner side of the metal ring 22, so that the threaded holes of the connecting edge 21 are aligned with the threaded holes or through holes of the metal ring 22 respectively. In this case, through screwing the bolts 25 into the threaded holes, respectively, the outer wall 1, the metal ring 22 and the sealing member 2 can be connected together. Through the arrangement of the bolts 25, the connection of the sealing member 2 with the outer wall 1 is more stable, and at the same time, it is easy to mount the sealing member 2 on the outer wall 1 or remove the sealing member 2 from the outer wall 1.

In one embodiment, as shown in Fig. 3, a projecting element 26 is provided on an inner side edge of the sealing member 2, and clamped inside the core shaft 3. In the present embodiment, the projecting element 26 is arranged on both of an upper side and a lower side of the inner edge of the sealing member 2. The projecting element 26 may be a complete projecting element having a full circular shape, or a number of discrete protrusions which are cylindrical or other shaped.

In the chamber device for the liquid composite spring according to the present embodiment, the sealing member 2 is provided on its inner side with the projecting element 26 extending into the core shaft 3, so that the sealing member 2 is clamped to the core shaft 3 through the projecting element 26. In this manner, the part of the sealing member 2 inside the core shaft 3 will not move, and the projecting element 26 can further prevent liquid from flowing out, thus enhancing the sealing effect.

In an embodiment, the core shaft 3 is provided with a step 31, which is configured as a full ring along the circumference of the core shaft 3. The upper portion of the core shaft 3 is relatively thick while the lower portion thereof is relatively thin, so that the step 31 is formed at the transition area between the relatively thick upper portion and the relatively thin lower portion. The step 31 is provided with a clamping slot 32, which has a shape corresponding to that of the projecting element 26. The inner edge of the sealing member 2 is arranged below the step 31, and the projecting element 26 is clamped in the clamping slot 32.

In a preferred embodiment, a metal gasket 33 is provided on the core shaft 3. In particular, the metal gasket 33 is detachably connected to the lower side of the sealing member 2. The metal gasket 33 may have an annular ring shape, and is located below the step 31 of the core shaft 3. The inner side of the metal gasket 33 is in engagement with the relatively thin lower portion of the core shaft 3. Preferably, the metal gasket 33 is provided with a slot having a shape corresponding to the projecting element 26.

In one embodiment, a rubber body 16 having good sealing performance and certain elasticity is provided at a bottom of the upper liquid chamber 11. In this manner, the volume of the upper liquid chamber 11 is variable. During the flow of liquid, it can ensure that the shape of the upper liquid chamber 11 will be changed as the liquid flows in or out. In this embodiment, the lower liquid chamber 12 is connected to the upper liquid chamber 11 through a flow channel body 15 and a plurality of partitioning plates 13. The flow channel body 15 is provided therein with a damping flow channel, which connects the upper liquid chamber 11 with the lower liquid chamber 12. When the liquid composite spring according to this embodiment is deformed, liquid can be circulated between the upper liquid chamber 11 and the lower liquid chamber 12 through the damping flow channel.

In another preferred embodiment, as shown in Fig. 1, the rubber body 16 is filled within the gap formed between the flow channel body 15 and the partitioning plates 13. Preferably, the flow channel body 15 is made of a flexible material, such as rubber, thus improving the deformability thereof.

Although the present invention has been described with reference to preferred embodiments, various improvements can be made to the present invention and components in the present invention can be replaced with equivalent counterparts without deviating from the scope of the present invention. In particular, as long as no structural conflict exists, various technical features as mentioned in different embodiments can be combined in any arbitrary manner. The present invention is not limited to the specific embodiments disclosed herein, but contains all the technical solutions falling within the scope of the claims.

## Claims

1. A chamber device for a liquid composite spring, comprising:
an outer wall;
an upper liquid chamber formed in an upper portion of the outer wall, the upper liquid chamber being filled with liquid; and
a lower liquid chamber formed in a lower portion of the outer wall, the lower liquid chamber being filled with liquid and in communication with the upper liquid chamber,
wherein a bottom of the outer wall is provided with a sealing member for sealing the lower liquid chamber, the sealing member being deformable so that the lower liquid chamber is formed as a flexible chamber.

2. The chamber device for the liquid composite spring according to claim 1, wherein a main body of the sealing member is of an annular structure, and has a connecting edge arranged at an outer edge of the sealing member along an axial direction of the outer wall, and
an upper end of the connecting edge is connected with the bottom of the outer wall, while an inner tail thereof is connected with a core shaft.

3. The chamber device for the liquid composite spring according to claim 2, wherein the bottom of the outer wall is provided with a groove along a circumferential direction thereof, the upper end of the connecting edge of the sealing member being arranged in the groove.

4. The chamber device for the liquid composite spring according to claim 3, wherein a metal ring is provided between the connecting edge of the sealing member and the groove, and a flange, which is flush with the connecting edge, is formed at an inner side of an upper part of the metal ring.

5. The chamber device for the liquid composite spring according to claim 4, wherein a rubber pad is arranged between the metal ring and the outer wall.

6. The chamber device for the liquid composite spring according to claim 4 or 5, wherein the outer wall, the metal ring and the sealing member are connected together through at least one bolt.

7. The chamber device for the liquid composite spring according to any one of claims 1 to 6, wherein a projecting element is provided on an inner side of the sealing member, and is clamped inside the core shaft.

8. The chamber device for the liquid composite spring according to claim 7, wherein the core shaft is provided with a step having a clamping slot, and
the inner tail of the sealing member is arranged below the step, and the projecting element is clamped in the clamping slot.

9. The chamber device for the liquid composite spring according to claim 8, wherein the core shaft is provided with a metal gasket, which is detachably connected to a lower side of the sealing member.

10. The chamber device for the liquid composite spring according to claim 9, wherein a rubber body is provided at a bottom of the upper liquid chamber, and the lower liquid chamber is connected to the upper liquid chamber through a flow channel body and a plurality of partitioning plates.

11. The chamber device for the liquid composite spring according to claim 10, wherein the rubber body is filled within a gap formed between the flow channel body and the partitioning plates.
